# FASCICULE DE BREVET EUROPEEN

(11) **EP 3 526 472 B1**
(45) Date de publication et mention de la délivrance du brevet: **16.08.2023**
(21) Numéro de dépôt: 17793998.0
(22) Date de dépôt: 11.10.2017
(51) Int. Cl.: F03H 1/00

(54) **PROPULSEUR IONIQUE À DÉCHARGE PLASMA EXTERNE**
IONENANTRIEB MIT EXTERNER PLASMAENTLADUNG
ION THRUSTER WITH EXTERNAL PLASMA DISCHARGE

(30) Priorité: 11.10.2016 FR 1659808
(43) Date de publication de la demande: 21.08.2019
(73) Titulaire: Centre National de la Recherche Scientifique CNRS, 75016 Paris (FR)
(72) Inventeur: MAZOUFFRE, Stéphane, 45100 Orleans (FR); TSIKATA, Sedina, 45000 Orleans (FR)
(74) Mandataire: Atout PI Laplace
(86) Numéro de dépôt international: PCT/FR2017/052789
(87) Numéro de publication internationale: WO 2018/069642

(56) Documents cités:
- WO-A1-2015/177938
- US-A- 5 646 476
- US-A1- 2012 187 843
- US-A1- 2015 128 560

## Description

### Domaine de l'invention

La présente invention concerne un propulseur ionique permettant la génération et le confinement d'une décharge plasma dans un espace de confinement externe créé par un champ magnétique *̅B̅*̅ externe.

### Contexte de l'invention

Les propulseurs ioniques, autrement appelés propulseurs à plasma ou électriques, pour les véhicules spatiaux permettent de réduire significativement la consommation de carburant grâce à une grande vitesse d'éjection de ce dernier. Cependant ces propulseurs, qui s'opposent aux propulseurs chimiques, offrent une poussée relativement limitée. De ce fait, ils doivent fonctionner pendant des temps très longs, pouvant aller jusqu'à plusieurs années en tir cumulé, afin de permettre au véhicule spatial d'atteindre une vitesse finale élevée. La durée de vie des propulseurs ioniques est donc un critère de premier ordre. Cette durée de vie est limitée par l'usure des éléments, en particulier le système générant le champ électrique qui génère une décharge plasma et accélère les ions du carburant ainsi que l'espace interne du propulseur ionique dans lequel la décharge plasma est confinée. Cette usure des éléments provient de l'interaction directe desdits éléments avec la décharge plasma.

Par exemple, les propulseurs ioniques décrits dans US 2015/0128560, US 5,646,476 et US 2012/0187843 ont une durée de vie limitée car la décharge plasma créée est confinée dans leur espace interne.

De façon surprenante, la Demanderesse a trouvé qu'il était possible de s'affranchir de ces problèmes d'usure de matériaux grâce à un propulseur ionique qui permet de créer une décharge plasma et de la confiner à l'extérieur du propulseur.

Ainsi, l'invention concerne un dispositif selon les revendications indépendantes. D'autres modes de réalisation sont définis dans les revendications dépendantes..

### Figures

La Figure 1a représente une section transversale selon l'axe (Ox) d'un repère orthogonal (O, x, y, z) d'un mode de réalisation du propulseur ionique selon l'invention, sur laquelle sont représentés de façon schématique les champs électrique et magnétique générés lors de l'utilisation dudit propulseur.
La Figure 1b représente une coupe selon l'axe AA' de la Figure 1a.
La Figure 1c représente une vue de face du mode de réalisation de la Figure 1a.
Les Figures 2 et 3 représentent chacune la section transversale selon l'axe(Ox) de deux modes de réalisation distincts du propulseur ionique selon l'invention.

### Description détaillée de l'invention

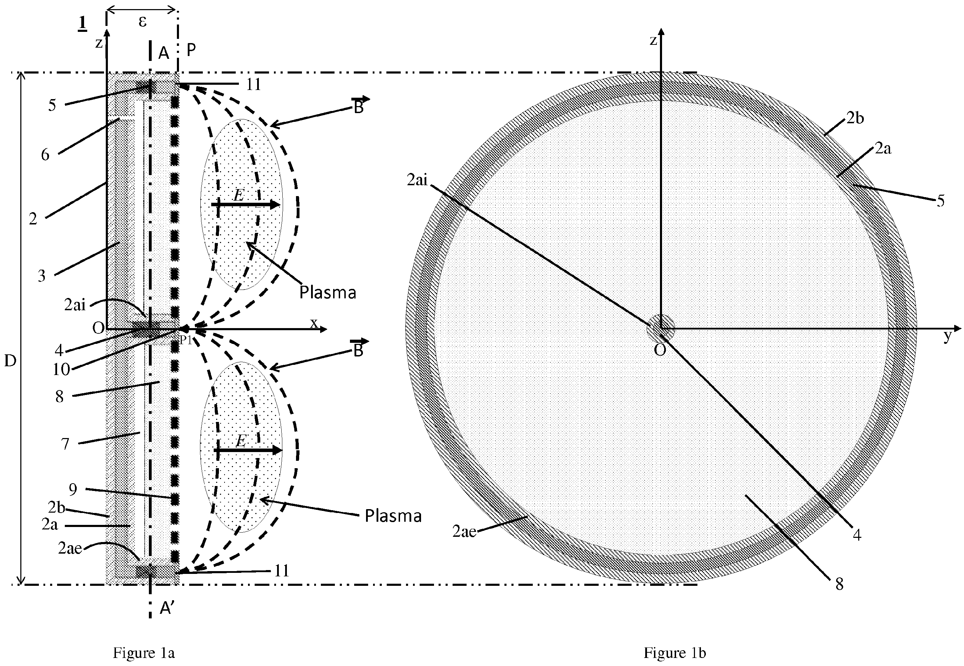

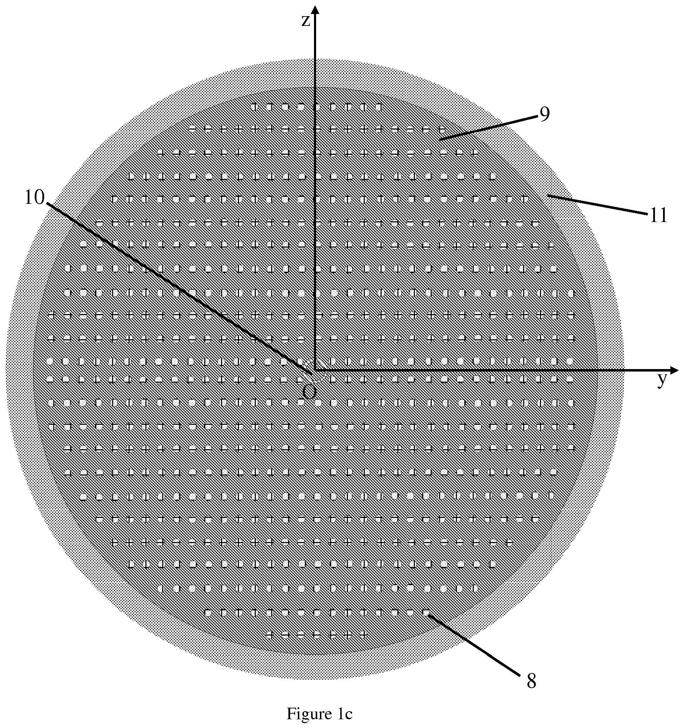

La présente invention est décrite ci-dessous en référence aux Figures 1 à 3.

Selon un premier aspect, la présente invention porte sur un propulseur ionique 1 comprenant :
- un corps 2 présentant une symétrie de révolution autour d'un axe de révolution (Ox) et ayant la forme générale d'un E capital selon une section transversale dans un plan passant par l'axe de révolution (Ox), le corps 2 comprenant en son sein un circuit magnétique 3, un élément 4 générant un champ magnétique et un élément annulaire 5 générant un champ magnétique, ledit élément 4 étant disposé selon la section transversale dans la traverse centrale du E capital, et ledit élément annulaire 5 présentant une symétrie de révolution autour de l'axe de révolution (Ox) et étant disposé selon la section transversale dans les traverses extrémales du E capital, l'élément 4 et l'élément annulaire 5 présentant une polarité magnétique opposée,
- une anode 9 recouvrant un espace annulaire interne 7, ledit espace annulaire présentant une symétrie de révolution autour de l'axe de révolution (Ox) et correspondant, selon la section transversale, au contrepoinçon du E capital, ladite anode 9 étant telle que, en fonctionnement, elle permet le passage du gaz de l'espace annulaire interne 7 vers la partie externe du bouclier selon une direction [O *̅x̅*̅),
- une conduite de gaz 6 traversant le corps 2 et débouchant dans l'espace annulaire interne 7?
- un diffuseur 8 disposé dans ledit espace annulaire interne 7, et
- une cathode (non représentée) reliée mécaniquement au corps 2,
caractérisé en ce que le diffuseur 8 et l'anode 9 occupent au moins 50%, de préférence de 60 à 100%, et préférentiellement de 75% à 95% de l'espace annulaire interne 7.

Dans la présente invention, la coupe transversale passant par l'axe de révolution (Ox) est également appelée « coupe transversale ».

Au sens de la présente invention, le terme "contrepoinçon" désigne le ou les espaces intérieurs ouverts de certaines lettres.

Au sens de la présente invention, tout élément qualifié "interne" est compris dans la partie interne du propulseur ionique 1, c'est-à-dire dans la zone comprise entre le plan (Oy, Oz) et le plan P de l'anode, c'est-à-dire le plan parallèle au plan (Oy, Oz) passant par P₁, tandis que tout élément qualifié "externe" est compris en dehors de cette zone. L'espace annulaire interne 7 est donc compris dans la partie interne du propulseur ionique 1.

Au sens de la présente invention, la direction [O *̅x̅*̅) est la direction le long de l'axe de révolution (Ox) allant de la partie interne du propulseur ionique 1 vers la partie externe du propulseur ionique 1.

Selon un mode de réalisation, le corps 2 qui présente une symétrie de révolution autour de l'axe (Ox) peut notamment être de forme générale circulaire de rayon D/2. Il est formé d'une double enveloppe 2a, 2b dans laquelle est disposé le circuit magnétique 3. Selon une section transversale passant par l'axe (Ox), cette double enveloppe a la forme d'un E capital. L'enveloppe externe 2b est essentiellement plane, perpendiculaire à l'axe (Ox), son extrémité externe est pliée perpendiculairement selon la direction [O *̅x̅*̅). L'enveloppe interne 2a est essentiellement plane, de forme annulaire d'axe de révolution (Ox), chacune de ses extrémités interne 2ai et externe 2ae est pliée perpendiculairement selon la direction [O *̅x̅*̅). Les extrémités de la double enveloppe correspondent selon la coupe transversale aux branches du E.

Dans la double enveloppe constituant le corps 2 du propulseur, est disposé un circuit magnétique qui est un dispositif constitué d'un matériau capable de transporter un flux magnétique suffisant pour générer à l'extérieur un champ magnétique dont l'intensité est supérieure à 100 G, l'intensité étant mesurée suivant un axe parallèle à l'axe (Ox) et distant de D/4. Typiquement, le matériau capable de transporter un tel flux magnétique peut être choisi parmi le fer, les alliages fer-cobalt, et les ferrites. En fonction du matériau choisi le circuit magnétique 3 peut remplir partiellement ou entièrement le corps 2. Le circuit magnétique 3 relie les éléments 4 et 5. Il permet d'orienter le champ magnétique vers la partie externe du propulseur et il permet de donner la forme souhaité aux lignes du champ magnétique externe. En l'absence d'un tel circuit magnétique, la perte d'énergie magnétique utile serait très importante.

Selon l'invention l'anode 9 est un dispositif généralement plan constitué d'un matériau conducteur électrique et thermique. Elle est disposée en regard du corps 2 de telle sorte qu'elle recouvre l'espace annulaire interne 7. Selon les modes de réalisation décrits sur les figures 1 à 3, l'anode 9 est disposée, selon la section transversale, de la traverse centrale aux traverses extrémales du E capital, l'anode passe donc par le plan P, c'est-à-dire le plan parallèle au plan (Oy, Oz) passant par P₁ (qui est le point d'intersection du plan P et de l'axe de révolution (Ox)). Selon un mode de réalisation particulier, l'anode est de forme générale annulaire. Elle est telle qu'elle permet le passage du gaz de l'espace annulaire interne 7 vers la partie externe du propulseur ionique 1 selon la direction [O *̅x̅*̅).

De façon avantageuse, l'anode 9 est perforée de façon à permettre ce passage du gaz. Selon un mode de réalisation, tel que représenté sur les figures 1a et 1c, l'anode comprend des orifices disposés régulièrement autour de l'axe de révolution (Ox) et étant disposés selon la section transversale entre la traverse centrale et les traverses extrémales du E capital.

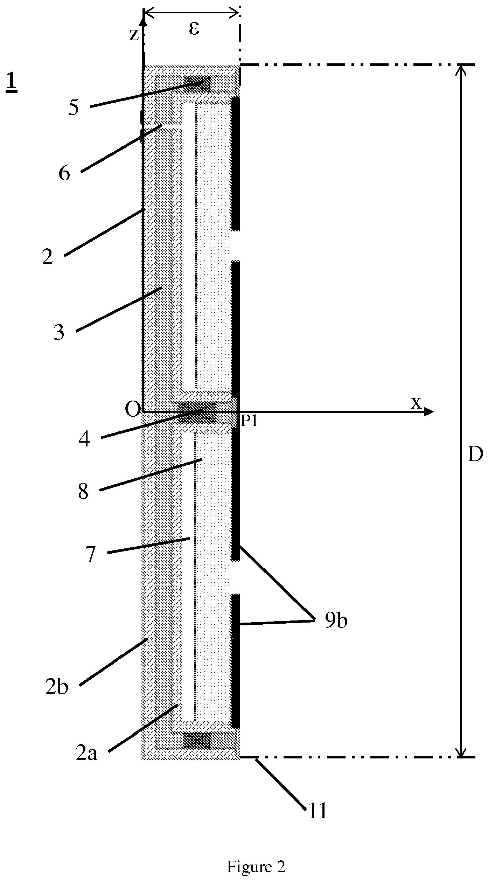

Selon un autre mode de réalisation, tel que représenté sur la figure 2, l'anode comprend un orifice annulaire, l'orifice annulaire présentant une symétrie de révolution autour de l'axe de révolution (Ox) et étant disposé selon la section transversale S entre la traverse centrale et les traverses extrémales du E capital.

Selon l'invention, le diffuseur 8 est un dispositif comprenant un matériau poreux ou alvéolaire ou bien un dispositif mécanique à chicanes résistant à la chaleur. Le diffuseur 8, qui est disposé dans l'espace annulaire interne 7, permet d'homogénéiser le gaz introduit dans l'espace annulaire interne 7 par la conduite de gaz 6. Il est généralement non conducteur électrique.

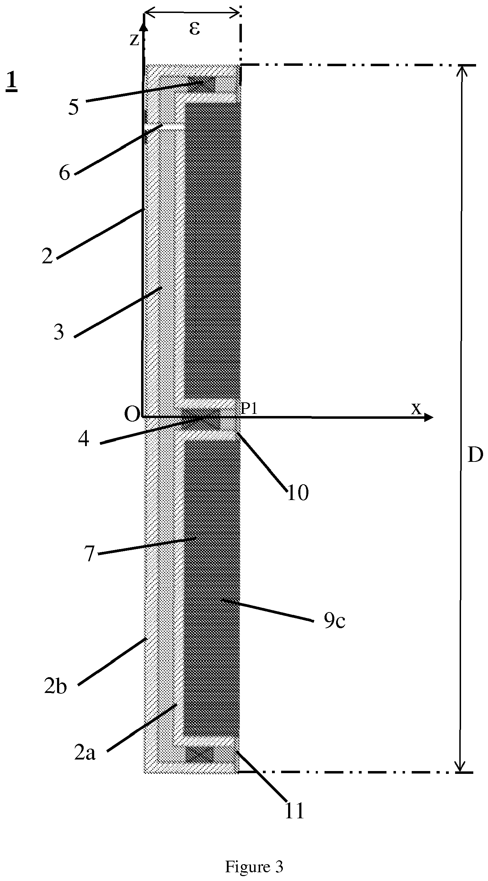

Cependant, selon un mode de réalisation particulier, le diffuseur peut être conducteur électrique et jouer alors le rôle d'anode. Ainsi, selon un mode de réalisation tel qu'illustré sur la figure 3 l'anode et le diffuseur sont un seul et même élément.

Le diffuseur 8 peut être constitué d'un matériau poreux ou alvéolaire choisi parmi les céramiques, telles que les mullites; les mousses métalliques dans le cas d'un diffuseur conducteur, et leur mélange.

Afin d'homogénéiser le gaz introduit par la conduite de gaz 6 dans l'espace annulaire interne 7, le diffuseur 8 peut présenter une porosité (ou plus grande dimension passante des alvéoles) de 1 micron à 1 millimètre environ. La porosité ne doit pas être trop fine car elle doit permettre le passage du gaz mais elle ne doit pas être trop grossière de façon à ce que le gaz soit bien homogénéisé et que le plasma ne pénètre pas dans le diffuseur. La porosité du diffuseur peut être mesurée par porosimétrie Hg et par microscopie électronique.

La conduite de gaz 6 est un dispositif permettant d'introduire un gaz depuis la partie externe du propulseur ionique 1 à travers le corps 2 dans l'espace annulaire interne 7. Typiquement, le propulseur ionique 1 selon l'invention peut comprendre1, 2 ou 3 conduites de gaz 6, plus particulièrement le propulseur ionique 1 selon l'invention peut comprendre 1 conduite de gaz 6.

Au sens de la présente invention, on entend par "cathode" un dispositif constitué d'un matériau conducteur électrique qui émet des électrons.

L'anode 9 et la cathode génèrent un champ électrique *̅E̅*̅ externe qui ionise le gaz homogénéisé passant à travers l'anode 9, générant ainsi une décharge plasma dans la partie externe du propulseur ionique 1 selon l'invention.

L'élément 4 générant un champ magnétique, comme l'élément annulaire 5 générant un champ magnétique, est un dispositif destiné à produire un champ magnétique externe. Ils sont choisis indépendamment l'un de l'autre parmi un aimant permanent et une bobine magnétique. Chacun des éléments 4 et 5 peut être à la fois un aimant permanent et une bobine magnétique. De plus leur polarité magnétique est différente, *i.e.* que si l'élément 4 générant un champ magnétique présente un pôle nord alors l'élément annulaire 5 générant un champ magnétique présente un pôle sud, et *vice-versa.*

Typiquement, l'élément 4 peut avoir une de forme générale cylindrique ou une forme générale annulaire comprenant un ou plusieurs éléments.

Au sens de la présente invention, on entend par "aimant permanent" un dispositif constitué d'un alliage ferromagnétique comprenant un atome choisi parmi fer, cobalt, nickel, un atome du groupe des lanthanides, de préférence l'aimant permanent est un dispositif constitué d'un alliage ferromagnétique de formule Fe₂O₃XO, où X est un atome de manganèse, zinc, cobalt ou nickel. De préférence l'aimant permanent est un dispositif constitué de AINiCo, SmCo ou NdFeB et leur mélange.

L'élément 4 et l'élément annulaire 5 génèrent un champ magnétique à externe. Le champ magnétique *̅B̅*̅externe. De plus, le champ magnétique *̅B̅*̅ étant externe , son maximum est présent dans la partie externe du propulseur ionique 1 Il peut être soit à gradient négatif soit à gradient positif puis négatif dans la direction [Ox) avec un maximum au voisinage du plan P. Ses lignes de champs sont courbées et passent, selon la section transverse, par les empattements de la traverse centrale et des traverses extrémales du E capital. Cette topologie permet de limiter l'intersection de ces lignes de champs avec l'anode 9 et donc permet de réduire l'interaction magnétique directe entre l'anode 9 et le champ magnétique *̅B̅*̅ externe et d'augmenter la durée de vie de l'anode 9 et donc du propulseur ionique 1 selon l'invention.

L'intensité maximale du champ magnétique *̅B̅*̅ externe est plus élevée que celle du champ magnétique interne généré dans un propulseur ionique classique. Typiquement l'intensité maximale du champ magnétique *̅B̅*̅ externe est de 100 à 1000 G, de préférence de 300 à 800 G, l'intensité étant mesurée selon un axe parallèle à l'axe (Ox) et distant de D/4.

De façon avantageuse, la topologie et l'intensité du champ magnétique *̅B̅*̅ externe créent ainsi un espace de confinement externe permettant de confiner la décharge plasma dans la partie externe du propulseur ionique 1 selon l'invention. Cet espace de confinement externe et l'espace annulaire interne 7 sont positionnés de part et d'autre de l'anode 9.

Dans le propulseur ionique 1 selon l'invention, le diffuseur 8 et l'anode 9 occupent au moins 50%, de préférence de 60 à 100%, et préférentiellement de 75% à 95% de l'espace annulaire interne 7.

Sans vouloir être liés par aucune théorie, les inventeurs sont d'avis que l'occupation de l'espace annulaire interne 7 par le diffuseur 8 et l'anode 9 telle que définie ci-dessus permet de créer la décharge plasma et de la confiner dans la partie externe du propulseur ionique 1, en particulier de la confiner dans l'espace de confinement externe.

De plus grâce à cette occupation de l'espace annulaire interne 7 par le diffuseur 8 et l'anode 9 telle que définie ci-dessus, le corps 2 du propulseur ionique 1 selon l'invention présente une taille de 2,5 à 5 fois inférieure à la taille du corps d'un propulseur ionique classique. En effet le corps 2 présente un diamètre D 5 à 10 fois supérieur à l'épaisseur ε, le diamètre D étant la plus grande dimension du corps 2 et l'épaisseur ε étant la distance entre les points O (qui est le point d'intersection entre l'enveloppe externe 2b et l'axe de révolution (Ox)) et P1 (qui est le point d'intersection du plan P et de l'axe de révolution (Ox)). En comparaison, le corps d'un propulseur ionique classique présente un diamètre de 2 à 4 fois sa hauteur. Le propulseur ionique 1 selon l'invention est donc avantageusement plus mince qu'un propulseur ionique classique. Le propulseur ionique 1 selon l'invention est par conséquent plus léger qu'un propulseur ionique classique.

De façon avantageuse, le corps 2 de forme générale cylindrique, en particulier circulaire favorise la génération du champ magnétique *̅B̅*̅ externe.

Selon un mode de réalisation, le corps 2 peut être constitué d'un matériau choisi parmi les céramiques, telles que alumine, zircone, carbure ; des métaux tels que tantale, aluminium, des polymères tels que PEEK (polyétheréthercétone), polymères thermodurs ; le carbone et leur mélange.

Selon un mode de réalisation particulier, l'enveloppe 2a et l'enveloppe 2b constitutives du corps peuvent être constituées de matériaux différents.

Selon un mode de réalisation, l'anode 9 peut être constituée d'un matériau choisi parmi des métaux tels que aluminium, tantale, aciers, ou carbone et leur mélange.

L'interaction directe du propulseur ionique selon l'invention avec la décharge plasma étant réduite, les matériaux du corps notamment 2b, du diffuseur 8 et de l'anode 9 n'ont pas à résister aux contraintes générées par la décharge plasma créée et confinée dans la partie externe du propulseur ionique 1 selon l'invention. De façon avantageuse, ces matériaux sont moins onéreux, plus légers et plus faciles à détruire lors de la rentrée dans l'atmosphère que ceux mis en oeuvre dans un propulseur ionique classique. Le propulseur ionique 1 selon l'invention est donc plus économique qu'un propulseur ionique classique et crée peu ou pas de débris spatiaux.

Typiquement, l'anode 9 peut avoir différentes configurations. Par exemple l'anode 9 peut être un disque de sorte qu'elle n'est pas en contact avec les traverses extrémales du E capital. L'anode 9 peut également être un anneau présentant une symétrie ou une asymétrie de révolution autour de l'axe de révolution (Ox) et comprenant un orifice annulaire présentant une symétrie ou une asymétrie de révolution autour de l'axe de révolution (Ox), ledit orifice étant disposé de sorte que l'anode 9 soit au moins en contact avec la traverse centrale du E capital. L'anode 9 peut aussi être un anneau multiple présentant une symétrie ou une asymétrie de révolution autour de l'axe de révolution (Ox) et comprenant au moins deux orifices annulaires présentant une symétrie ou une asymétrie de révolution autour de l'axe de révolution (Ox), lesdits orifices annulaires étant disposés de sorte que l'anode 9 soit au moins en contact avec la traverse centrale du E capital. L'anode 9 peut également être une grille.

Quelle que soit la configuration de l'anode 9, il est préférable que, au voisinage d'un axe parallèle à (Ox) et distant de D/4, la surface de l'anode 9 soit parallèle aux lignes du champ magnétique *̅B̅*̅ externe afin que l'anode 9 soit écrantée magnétiquement. De façon avantageuse, cela permet de réduire l'interaction directe entre l'anode 9 et la décharge plasma externe, et donc d'augmenter la durée de vie de l'anode 9 et donc du propulseur ionique 1 selon l'invention.

En plus de l'interaction magnétique, l'anode 9 subit, de la part de la décharge plasma, une contrainte thermique. Cette contrainte thermique est réduite par le confinement externe de ladite décharge plasma.

Selon un mode de réalisation particulier, l'anode 9 peut être en contact avec le diffuseur 8.

Selon un autre mode de réalisation particulier, l'anode 9 et le diffuseur 8 peuvent être le même élément. De façon avantageuse, utiliser un seul élément au lieu de deux permet de réduire la taille et la masse du propulseur ionique 1.

Typiquement la cathode est comprise dans la partie externe du propulseur.

Selon un mode de réalisation particulier, la cathode peut être comprise dans la partie interne du propulseur ionique 1 selon l'invention.

Selon ce mode de réalisation, la cathode peut être disposée, selon la section transversale, dans la traverse centrale du E capital, de préférence dans l'élément 4 ayant une forme générale annulaire. La cathode peut également être annulaire et être disposée selon la section transversale S dans les traverses extrémales E du corps 2. De façon avantageuse, la taille du propulseur ionique 1 selon ce mode de réalisation est réduite.

Selon ce mode de réalisation, la cathode doit être constituée d'un matériau émetteur d'électrons fonctionnant à relativement basse température afin de ne pas endommager l'élément 4 et l'élément annulaire 5 générant un champ magnétique. Typiquement ce matériau un aluminate de calcium tel que le dodécacalcium hepta-aluminate C12A7 .

Selon un mode de réalisation, le propulseur ionique 1 comprend en outre une protection des pôles magnétiques 10 et une protection annulaire des pôles magnétiques 11. La protection 10 recouvre l'empattement de la traverse centrale du E capital. La protection annulaire 11 recouvre l'empattement des traverses extrémales du E capital. De façon avantageuse, ces deux protections permettent de protéger la seconde extrémité du corps 2 contre le champ magnétique *̅B̅*̅ externe et augmentent donc la durée de vie du propulseur ionique 1.

Typiquement, la protection 10 et la protection annulaire 11 sont constituées d'un matériau choisi parmi les céramiques, telles que alumine; les métaux, tels que aluminium ou tantale ; carbone et leur mélange, de préférence alumine, carbone et leur, mélange.

Le propulseur ionique 1 selon l'invention peut en outre comprendre des drains thermiques pour dissiper la charge thermique générée par la décharge plasma et maintenir le propulseur ionique 1 à une température relativement basse, *i.e.* de 100 à 200°C, telle que mesurée au niveau des aimants . En effet, maintenir le propulseur ionique 1 dans cette gamme de température permet de ne pas endommager les éléments du propulseur ionique 1 tels que l'anode 9, l'élément 4 et l'élément annulaire 5 générant un champ magnétique, et donc augmente la durée de vie du propulseur ionique 1. Typiquement les drains peuvent être reliés à des radiateurs qui dissipent la chaleur par radiation pour faciliter le maintien du propulseur ionique 1 dans cette gamme de température.

Compte tenu de ses propriétés, en particulier de sa faible taille, de sa faible masse, de la possibilité de générer une décharge plasma dans la partie externe du propulseur ionique 1 selon l'invention et de la confiner dans l'espace de confinement externe, par exemple dans le vide de l'espace, le propulseur ionique 1 selon l'invention peut être utilisé pour la propulsion d'un véhicule spatial tel qu'une sonde, un satellite, une capsule spatiale, une navette spatiale ou une station spatiale.

Typiquement le propulseur ionique 1 selon l'invention est adapté à tout type de satellite, notamment des satellites de faible masse tels que les mini-satellites, les micro-satellites, les nano-satellites et les cubsats, en particulier les mini-satellites et les micro-satellites mais aussi à des satellites de grandes tailles.

De façon avantageuse, générer et confiner la décharge plasma dans cet espace de confinement externe permet de réduire l'interaction directe des éléments du propulseur ionique selon l'invention avec la décharge plasma. Par rapport à un propulseur ionique classique, la durée de vie du propulseur ionique selon l'invention est donc augmentée. De plus en réduisant l'interaction directe des éléments du propulseur ionique selon l'invention avec la décharge plasma, les pertes aux parois des éléments sont réduites significativement, le propulseur ionique selon l'invention présente donc un bon rendement et une consommation inférieure à celle d'un propulseur ionique classique. Le propulseur ionique selon l'invention n'ayant pas à subir toutes les contraintes générées par la décharge plasma, des éléments dont les matériaux sont moins onéreux, plus légers et plus faciles à détruire lors de la rentrée dans l'atmosphère que ceux mis en oeuvre dans un propulseur ionique classique peuvent être utilisés. Pour la même raison, le propulseur ionique selon l'invention peut fonctionner à des tensions plus hautes qu'un propulseur ionique classique et donc fonctionner à haute impulsion spécifique, ce qui réduit sa consommation. Le propulseur ionique selon l'invention peut aussi mettre en oeuvre des carburants alternatifs moins onéreux que le xénon mis en oeuvre dans un propulseur ionique classique. Le propulseur ionique selon l'invention a donc avantageusement une durée de vie supérieure à un propulseur ionique classique tout en étant plus petit, plus léger, plus économique et en créant peu ou pas de débris spatiaux conformément aux réglementations en la matière.

Par rapport à des propulseurs ioniques classiques, le propulseur ionique selon l'invention, du fait que la décharge plasma est externe, est plus facilement extrapolable au grandes tailles nécessitant une forte poussée, et est particulièrement approprié pour être extrapolé aux petites tailles car l'effet de paroi est moins limitant que dans les propulseurs classiques.

Selon un autre aspect, l'invention porte sur un procédé de génération d'une poussée propulsive d'un véhicule spatial au moyen du propulseur ionique 1 selon l'invention comprenant les étapes suivantes:
a) introduction d'un gaz par la conduite de gaz 6 dans l'espace annulaire interne 7 du propulseur ionique 1,
b) génération du champ électrique *̅E̅*̅ externe par l'anode 9 et une cathode et génération d'un champ magnétique *̅B̅*̅ externe par l'élément 4 et l'élément annulaire 5 générant un champ magnétique créant ainsi un espace de confinement externe au propulseur ionique 1, l'espace de confinement externe et l'espace annulaire interne étant positionnés de part et d'autre de l'anode 9,
c) ionisation du gaz introduit dans l'espace annulaire interne 7 par le champ électrique *̅E̅*̅ externe, et génération d'une décharge plasma à partir du gaz ionisé dans l'espace de confinement externe,
d) confinement de la décharge plasma dans l'espace de confinement externe
e) accélération des ions de la décharge plasma par le champ électrique et éjection des ions hors de l'espace de confinement, et
f) apport par la cathode des électrons nécessaires pour assurer le maintien de la décharge plasma et la neutralité électrique.

Dans le procédé ci-dessus, les étapes a) à e) peuvent être réalisées simultanément ou séquentiellement.

Le procédé est particulièrement adapté pour un véhicule spatial tel qu'une sonde, un satellite, une capsule spatiale, une navette spatiale ou une station spatiale. Le procédé selon l'invention est tout particulièrement adapté à des satellites de faible masse tels que les mini-satellites, les micro-satellites, les nano-satellites et les cubsats, en particulier les mini-satellites et les micro-satellites.

Au cours de l'étape a) un gaz est introduit dans l'espace annulaire interne 7 par la conduite de gaz 6. Typiquement ce gaz est un gaz rare tel que le krypton, l'argon, le xénon ou leur mélange. De façon avantageuse, utiliser le krypton ou l'argon accroit significativement le gain financier du procédé de l'invention.

Typiquement le gaz peut être introduit au voisinage du diffuseur 8 ou directement dans le diffuseur 8.

Dans le procédé selon l'invention, l'interaction entre le propulseur ionique et la décharge plasma est réduite car la décharge plasma est générée et confinée dans l'espace de confinement externe. Le champ électrique *̅E̅*̅ externe et le champ magnétique *̅B̅*̅ externe peuvent par conséquent être générés au cours de l'étape b) avec des tensions de fonctionnement plus hautes qu'un propulseur ionique classique sans réduire la durée de vie du propulseur ionique 1 selon l'invention. Typiquement ces tensions de fonctionnement sont de l'ordre de 100 volts à 1000 volts , en particulier de l'ordre de 200 volts à 600 volts .

De façon avantageuse, une tension de fonctionnement dans les gammes ci-dessus permet un fonctionnement à haute impulsion spécifique ce qui a pour effet de réduire la consommation en gaz du propulseur ionique 1.

Au cours de l'étape d), la décharge plasma est confinée dans l'espace de confinement externe formant ainsi une décharge plasma confinée. Lors de l'étape e) les ions de cette décharge plasma confinée sont accélérés par le champ électrique et éjectés hors de l'espace de confinement.

## Revendications

1. Propulseur ionique (1) comprenant :
- un corps (2) présentant une symétrie de révolution autour d'un axe de révolution (Ox) et ayant la forme d'un E capital selon une coupe transversale passant par l'axe de révolution (Ox), le corps (2) comprenant en son sein un circuit magnétique (3), un élément (4) générant un champ magnétique et un élément annulaire (5) générant un champ magnétique, ledit élément (4) générant un champ magnétique étant disposé selon la section transversale dans la traverse centrale du E capital, et ledit élément annulaire (5) présentant une symétrie de révolution autour de l'axe de révolution (Ox) et étant disposé selon la section transversale S dans les traverses extrémales du E capital, l'élément générant un champ magnétique (4) et l'élément annulaire (5) générant un champ magnétique présentant une polarité magnétique opposée,
- une anode (9) disposée en regard du corps et recouvrant un espace annulaire interne (7), ledit espace annulaire interne présentant une symétrie de révolution autour de l'axe de révolution (Ox) et correspondant, selon la section transversale, au contrepoinçon du E capital, ladite anode étant telle que, en fonctionnement, elle permet le passage du gaz de l'espace annulaire interne (7) vers la partie externe selon la direction de l'axe de révolution,
- une conduite de gaz (6) traversant le corps (2) et débouchant dans l'espace annulaire interne (7)
- un diffuseur (8) disposé dans ledit espace annulaire interne (7), et
- une cathode reliée mécaniquement au corps (2),
ledit diffuseur (8) et ladite anode (9) occupant au moins 50%, de préférence de 60 à 100%, et préférentiellement de 75% à 95% de l'espace annulaire interne (7).

2. Propulseur ionique (1) selon la revendication 1, dans lequel l'anode (9) est en contact avec le diffuseur.

3. Propulseur ionique (1) selon la revendication 1 ou la revendication 2, dans lequel le diffuseur est un diffuseur poreux ou alvéolaire ou un diffuseur mécanique à chicanes (8).

4. Propulseur ionique (1) selon l'une quelconque des revendications 1 à 3, dans lequel l'anode (9) présente au moins un orifice débouchant dans l'espace annulaire (7).

5. Propulseur ionique selon l'une quelconque des revendications 1 à 4, **caractérisé par le fait que** l'anode est constituée d'un matériau choisi parmi des métaux tels que aluminium, tantale, aciers ou carbone et leur mélange.

6. Propulseur ionique (1) comprenant :
- un corps (2) présentant une symétrie de révolution autour d'un axe de révolution (Ox) et ayant la forme d'un E capital selon une coupe transversale passant par l'axe de révolution (Ox), le corps (2) comprenant en son sein un circuit magnétique (3), un élément (4) générant un champ magnétique et un élément annulaire (5) générant un champ magnétique, ledit élément (4) générant un champ magnétique étant disposé selon la section transversale dans la traverse centrale du E capital, et ledit élément annulaire (5) présentant une symétrie de révolution autour de l'axe de révolution (Ox) et étant disposé selon la section transversale S dans les traverses extrémales du E capital, l'élément générant un champ magnétique (4) et l'élément annulaire (5) générant un champ magnétique présentant une polarité magnétique opposée,
- un ensemble anode - diffuseur disposé en regard du corps et disposé dans et recouvrant un espace annulaire interne (7), ledit espace annulaire interne présentant une symétrie de révolution autour de l'axe de révolution (Ox) et correspondant, selon la section transversale, au contrepoinçon du E capital, ledit ensemble anode-diffuseur étant tel que, en fonctionnement, il permet le passage du gaz de l'espace annulaire interne (7) vers la partie externe selon la direction de l'axe de révolution,
- une conduite de gaz (6) traversant le corps (2) et débouchant dans l'espace annulaire interne (7)
- une cathode reliée mécaniquement au corps (2),
ledit ensemble anode-diffuseur occupant au moins 50%, de préférence de 60 à 100%, et préférentiellement de 75% à 95% de l'espace annulaire interne (7).

7. Propulseur ionique (1) selon l'une quelconque des revendications 1 à 6, dans lequel la cathode est:
- disposée dans la traverse centrale du E capital, ou
- est annulaire et est disposée selon la section transversale S dans les traverses extrémales E du corps (2).

8. Propulseur ionique (1) selon l'une quelconque des revendications 1 à 7, dans lequel une protection des pôles magnétiques (10) recouvre l'empattement de la traverse centrale du E capital et une protection annulaire des pôles magnétique (11) recouvre l'empattement des traverses extrémales du E capital.

9. Utilisation d'un propulseur ionique (1) tel que défini aux revendications 1 à 8 pour la propulsion d'un véhicule spatial tel qu'une sonde, un satellite, une capsule spatiale, une navette spatiale ou une station spatiale.

10. Procédé de génération d'une poussée propulsive d'un véhicule spatial au moyen d'un propulseur ionique (1) tel que défini aux revendications 1 à 8 comprenant les étapes suivantes:
a) introduction d'un gaz par la conduite de gaz (6) dans l'espace annulaire interne (7) du propulseur ionique (1),
b) génération d'un champ électrique *̅E̅*̅ externe par l'anode (9) et la cathode et génération d'un champ magnétique *̅B̅*̅ externe par l'élément (4) générant un champ magnétique et l'élément annulaire (5) générant un champ magnétique créant ainsi un espace de confinement externe au propulseur ionique (1), l'espace de confinement externe et l'espace annulaire interne étant positionnés de part et d'autre de l'anode (9),
c) ionisation du gaz introduit dans l'espace annulaire interne (7) par le champ électrique *̅E̅*̅ externe, et génération d'une décharge plasma à partir du gaz ionisé dans l'espace de confinement externe,
d) confinement de la décharge plasma dans l'espace de confinement externe,
e) accélération des ions de la décharge plasma par le champ électrique et éjection des ions hors de l'espace de confinement,
f) apport par la cathode des électrons nécessaires pour assurer le maintien de la décharge plasma et la neutralité électrique.

## Patentansprüche

1. Ionentriebwerk (1), Folgendes umfassend:
- einen Körper (2), der eine Rotationssymmetrie um eine Rotationsachse (Ox) aufweist und entlang eines durch die Rotationsachse (Ox) verlaufenden Querschnitts die Form eines Großbuchstabens E aufweist, wobei der Körper (2) in seinem Inneren einen magnetischen Kreis (3), ein ein Magnetfeld erzeugendes Element (4) und ein ein Magnetfeld erzeugendes ringförmiges Element (5) umfasst, wobei das ein Magnetfeld erzeugende Element (4) entlang des Querschnitts in dem mittleren Arm des Großbuchstabens E angeordnet ist, und das ringförmige Element (5) eine Rotationssymmetrie um die Rotationsachse (Ox) aufweist und entlang des Querschnitts S in den äußeren Armen des Großbuchstabens E angeordnet ist, wobei das ein Magnetfeld erzeugende Element (4) und das ein Magnetfeld erzeugende ringförmige Element (5) eine entgegengesetzte magnetische Polarität aufweisen,
- eine Anode (9), die gegenüber dem Körper angeordnet ist und einen inneren Ringraum (7) bedeckt, wobei der innere Ringraum eine Rotationssymmetrie um die Rotationsachse (Ox) aufweist und entlang des Querschnitts der Punze des Großbuchstabens E entspricht, wobei die Anode so beschaffen ist, dass sie im Betrieb den Durchgang des Gases aus dem inneren Ringraum (7) zum äußeren Teil entlang der Richtung der Rotationsachse ermöglicht,
- eine Gasleitung (6), die den Körper (2) durchquert und in den inneren Ringraum (7) mündet,
- einen Diffusor (8), der in dem inneren Ringraum (7) angeordnet ist, und
- eine Kathode, die mechanisch mit dem Körper (2) verbunden ist,
wobei der Diffusor (8) und die Anode (9) mindestens 50 %, vorzugsweise 60 bis 100 % und bevorzugt 75 % bis 95 % des inneren Ringraums (7) einnehmen.

2. Ionentriebwerk (1) nach Anspruch 1, wobei die Anode (9) mit dem Diffusor in Kontakt steht.

3. Ionentriebwerk (1) nach Anspruch 1 oder Anspruch 2, wobei der Diffusor ein poröser oder zellenförmiger Diffusor oder ein mechanischer Diffusor mit Schikanen (8) ist.

4. Ionentriebwerk (1) nach einem der Ansprüche 1 bis 3, wobei die Anode (9) mindestens eine Öffnung aufweist, die in den Ringraum (7) mündet.

5. Ionentriebwerk nach einem der Ansprüche 1 bis 4, **dadurch gekennzeichnet, dass** die Anode aus einem Material besteht, das aus Metallen wie Aluminium, Tantal, Stählen oder Kohlenstoff und deren Mischungen ausgewählt ist.

6. Ionentriebwerk (1), Folgendes umfassend:
- einen Körper (2), der eine Rotationssymmetrie um eine Rotationsachse (Ox) aufweist und entlang eines durch die Rotationsachse (Ox) verlaufenden Querschnitts die Form eines Großbuchstabens E aufweist, wobei der Körper (2) in seinem Inneren einen magnetischen Kreis (3), ein ein Magnetfeld erzeugendes Element (4) und ein ein Magnetfeld erzeugendes ringförmiges Element (5) umfasst, wobei das ein Magnetfeld erzeugende Element (4) entlang des Querschnitts in dem mittleren Arm des Großbuchstabens E angeordnet ist, und das ringförmige Element (5) eine Rotationssymmetrie um die Rotationsachse (Ox) aufweist und entlang des Querschnitts S in den äußeren Armen des Großbuchstabens E angeordnet ist, wobei das ein Magnetfeld erzeugende Element (4) und das ein Magnetfeld erzeugende ringförmige Element (5) eine entgegengesetzte magnetische Polarität aufweisen,
- eine Anoden-Diffusor-Anordnung, die gegenüber dem Körper angeordnet ist und in einem inneren Ringraum (7) angeordnet ist und diesen bedeckt, wobei der innere ringförmige Raum eine Rotationssymmetrie um die Rotationsachse (Ox) aufweist und entlang des Querschnitts der Punze des Großbuchstabens E entspricht, wobei die Anoden-Diffusor-Anordnung so beschaffen ist, dass sie im Betrieb den Durchgang des Gases aus dem inneren Ringraum (7) zum äußeren Teil entlang der Richtung der Rotationsachse ermöglicht,
- eine Gasleitung (6), die den Körper (2) durchquert und in den inneren Ringraum (7) mündet,
- eine Kathode, die mechanisch mit dem Körper (2) verbunden ist,
wobei die Anoden-Diffusor-Anordnung mindestens 50 %, vorzugsweise 60 bis 100 % und bevorzugt 75 % bis 95 % des inneren Ringraums (7) einnimmt.

7. Ionentriebwerk (1) nach einem der Ansprüche 1 bis 6, wobei die Kathode:
- in der mittleren Arm des Großbuchstabens E angeordnet ist, oder
- ringförmig ist und entlang des Querschnitts S in den äußeren Armen E des Körpers (2) angeordnet ist.

8. Ionentriebwerk (1) nach einem der Ansprüche 1 bis 7, wobei ein Magnetpolschutz (10) die Serife der mittleren Arms des Großbuchstabens E bedeckt und ein ringförmiger Magnetpolschutz (11) die Serife der äußeren Arme des Großbuchstabens E bedeckt.

9. Verwendung eines Ionentriebwerks (1), wie in den Ansprüchen 1 bis 8 definiert, für den Antrieb eines Raumfahrzeugs wie einer Sonde, eines Satelliten, einer Raumkapsel, eines Raumschiffs oder einer Raumstation.

10. Verfahren zur Erzeugung eines Antriebsschubs eines Raumfahrzeugs mittels eines Ionentriebwerks (1), wie in den Ansprüchen 1 bis 8 definiert, umfassend die folgenden Schritte:
a) Einleiten eines Gases durch die Gasleitung (6) in den inneren Ringraum (7) des Ionentriebwerks (1),
b) Erzeugen eines externen elektrischen Feldes E̅ durch die Anode (9) und die Kathode und Erzeugen eines externen Magnetfeldes B̅ durch das ein Magnetfeld erzeugende Element (4) und das ein Magnetfeld erzeugende ringförmige Element (5), wodurch ein externer Einschlussraum für das Ionentriebwerk (1) geschaffen wird, wobei der externe Einschlussraum und der innere ringförmige Raum auf beiden Seiten der Anode (9) positioniert sind,
c) Ionisieren des in den inneren Ringraum (7) eingeführten Gases durch das externe elektrische Feld E̅, und Erzeugen einer Plasmaentladung anhand des ionisierten Gases im externen Einschlussraum,
d) Einschließen der Plasmaentladung im externen Einschlussraum,
e) Beschleunigen der Ionen der Plasmaentladung durch das elektrische Feld und Ausstoßen der Ionen aus dem Einschlussraum,
f) Zuführen der Elektronen, die zur Aufrechterhaltung der Plasmaentladung und der elektrischen Neutralität erforderlich sind, durch die Kathode.

## Claims

1. An ion thruster (1) comprising:
- a body (2) having a symmetry of revolution about an axis of revolution (Ox) and having the shape of a capital E in a cross section passing through the axis of revolution (Ox), the body (2) comprising therein a magnetic circuit (3), an element (4) that generates a magnetic field and an annular element (5) that generates a magnetic field, said element that generates a magnetic field (4) being placed in the cross section in the central arm of the capital E, and said annular element (5) having a symmetry of revolution about the axis of revolution (Ox) and being placed in the cross section S in the upper and lower arms of the capital E, the element (4) that generates a magnetic field and the annular element (5) that generates a magnetic field having opposite magnetic polarities,
- an anode (9) arranged opposite the body and covering an internal annular space (7), said internal annular space having a symmetry of revolution about the axis of revolution (Ox) and corresponding, in the cross section, to the counter of the capital E, said anode being such that, in operation, it allows the passage of the gas from the internal annular space (7) to the external portion in the direction of the axis of revolution,
- a gas line (6) passing through the body (2) and opening into the internal annular space (7),
- a diffuser (8) placed in said internal annular space (7), and
- a cathode that is mechanically joined to the body (2),
said diffuser (8) and said anode (9) occupying at least 50%, preferably from 60 to 100% and preferentially from 75% to 95% of the internal annular space (7).

2. The ion thruster (1) according to claim 1, wherein the anode (9) contacts the diffuser.

3. The ion thruster (1) according to claim 1 or claim 2, wherein the diffuser is a porous or cellular diffuser or a chicaned mechanical diffuser (8).

4. The ion thruster (1) according to any one of claims 1 to 3, wherein the anode (9) has at least one orifice opening into the annular space (7).

5. The ion thruster according to any one of claims 1 to 4, **characterised in that** the anode is made of a material chosen from metals such as aluminium, tantalum, steels or carbon and mixtures thereof.

6. The ion thruster (1) comprising:
- a body (2) having a symmetry of revolution about an axis of revolution (Ox) and having the shape of a capital E in a cross section passing through the axis of revolution (Ox), the body (2) comprising therein a magnetic circuit (3), an element (4) that generates a magnetic field and an annular element (5) that generates a magnetic field, said element that generates a magnetic field (4) being placed in the cross section in the central arm of the capital E, and said annular element (5) having a symmetry of revolution about the axis of revolution (Ox) and being placed in the cross section S in the upper and lower arms of the capital E, the element (4) that generates a magnetic field and the annular element (5) that generates a magnetic field having opposite magnetic polarities,
- an anode-diffuser assembly arranged opposite the body and arranged inside and covering an internal annular space (7), said internal annular space having a symmetry of revolution about the axis of revolution (Ox) and corresponding, in the cross section, to the counter of the capital E, said anode-diffuser assembly being such that, in operation, it allows the passage of the gas from the internal annular space (7) to the external portion in the direction of the axis of revolution,
- a gas line (6) passing through the body (2) and opening into the internal annular space (7),
- a cathode that is mechanically joined to the body (2),
said anode-diffuser assembly occupying at least 50%, preferably from 60 to 100% and preferentially from 75% to 95% of the internal annular space (7).

7. The ion thruster (1) according to any one of claims 1 to 6, wherein the cathode is:
- placed in the central arm of the capital E, or
- is annular and is placed in the cross section S in the upper and lower arms E of the body (2).

8. The ion thruster (1) according to any one of claims 1 to 7, wherein a protection of the magnetic poles (10) covers the serif of the central arm of the capital E and an annular protection of the magnetic poles (11) covers the serif of the upper and lower arms of the capital E.

9. The use of an ion thruster (1) such as defined in claims 1 to 8 to propel a space vehicle such as a probe, a satellite, a space capsule, a space shuttle or a space station.

10. A method for generating propulsive thrust for a space vehicle by means of an ion thruster (1) such as defined in claims 1 to 8 comprising the following steps:
a) introducing a gas via the gas line (6) into the internal annular space (7) of the ion thruster (1),
b) generating an external electric field *̅E̅*̅ via the anode (9) and the cathode and generating an external magnetic field *̅B̅*̅ via the element (4) that generates, a magnetic field and the annular element (5) that generates a magnetic field, thus creating a confinement space external to the ion thruster (1), the external confinement space and the internal annular space being positioned on either side of the anode (9),
c) ionising the gas introduced into the internal annular space (7) with the external electric field *̅E̅*̅, and generating a plasma discharge from the ionised gas in the external confinement space,
d) confining the plasma discharge in the external confinement space,
e) accelerating the ions of the plasma discharge with the electric field and ejecting the ions out of the confining space.
f) supplying, via the cathode, the electrons required to ensure the plasma discharge and electrical neutrality are maintained.
